# EUROPÄISCHE PATENTSCHRIFT

(11) **EP 0 909 497 B1**
(45) Veröffentlichungstag und Bekanntmachung des Hinweises auf die Patenterteilung: **20.08.2003**
(21) Anmeldenummer: 97928264.7
(22) Anmeldetag: 20.06.1997
(51) Int. Cl.: H04L 25/02

(54) **BUSANKOPPLER MIT AMPLITUDENGESTEUERTER SENDESCHALTUNG**
BUS COUPLING WITH AMPLITUDE-CONTROLLED TRANSMISSION CIRCUIT
COUPLEUR DE BUS COMPORTANT UN CIRCUIT EMETTEUR COMMANDE EN AMPLITUDE

(30) Priorität: 04.07.1996 EP 96110850
(43) Veröffentlichungstag der Anmeldung: 21.04.1999
(73) Patentinhaber: SIEMENS AKTIENGESELLSCHAFT, 80333 München (DE)
(72) Erfinder: ZIERHUT, Hermann +di, deceased (DE)
(86) Internationale Anmeldenummer: EP9703254
(87) Internationale Veröffentlichungsnummer: WO98001980

(56) Entgegenhaltungen:
- EP-A- 0 004 306
- EP-A- 0 346 572
- US-A- 4 413 300
- US-A- 5 019 730

## Beschreibung

Die Erfindung bezieht sich auf einen Busankoppler mit amplitudengesteuerter Sendeschaltung zur Erzeugung eines im wesentlichen rechteckförmigen Aktivimpulses bei einem Sendeimpuls aus Aktivimpuls und Ausgleichsimpuls. Das Bussystem führt Wechselspannungsinformationen und Gleichspannung zum Bereitstellen von Bordnetzspannung von Teilnehmerstationen. Mit einem derartigen Bussystem der Gebäudesystemtechnik arbeitet beispielsweise die European Installation Bus Association, EIBA.

Im einzelnen bezieht sich die Erfindung auf einen Busankoppler nach Gattungsbegriff von Anspruch 1.

Derartige Busankoppler der Gebäudesystemtechnik, bei der der Bus Wechselspannungsinformationen und überlagerte Gleichspannung zur Versorgung der Bordnetze der Teilnehmerstationen führt, arbeiten üblicherweise mit einem Übertrager, der in seinem Volumen nicht nennenswert verringert werden kann.

Der Erfindung liegt die Aufgabe zugrunde, einen Busankoppler zu entwickeln, der auf wirtschaftliche Weise ohne Übertrager auskommt und der insgesamt in einem verringerten Volumen untergebracht werden kann.

Die Lösung der geschilderten Aufgabe erfolgt durch einen Busankoppler nach Anspruch 1. Die Sendeschaltung arbeitet mit einer Sendestufe, die einen Sendetransistors in Emitterschaltung aufweist. Seine Basis ist mit der Ansteuerleitung verbunden, wobei die Basis ferner zur Reduzierung des Ansteuersignals auf der Ansteuerleitung einen Reduzierungstransistor von im Vergleich zum Sendetransistor inversem Typ aufweist, dessen Emitter-Kollektor-Strecke der, Basis-Emitterstrecke des Sendetransistors parallel geschaltet ist. Die Basis des Reduzierungstransistors ist mit dem Abgriff eines Spannungsteilers verbunden, der mit seinem einen Außenanschluß mit einer Referenzspannung und mit seinem anderen Außenanschluß mit einem als Weiche für die Wechselspannung dienenden Kondensator verbunden ist. Der Kondensator ist einerseits mit seinem anderen Anschluß mit einem Busleiter verbunden. Wenn hier von Transistoren die Rede ist, so ist hierbei lediglich die Funktionsweise derartiger Bauelemente gemeint, wobei diese Bauelemente in integrierten Schaltungen realisiert sein können.

Ein Busankoppler nach der eingangs geschilderten Gattung ist bei einem Bussystem der Gebäudesystemtechnik, beispielsweise nach EIBA, üblich. Eine bekannte Schaltungsanordnung zum Übertragen von binären Signalen (EP 0 346 572 A2) bezieht sich auf eine Sendeschaltung zur Erzeugung eines im wesentlichen rechteckförmigen Aktivimpulses, wobei Wechselspannungsinformationen und Gleichspannung zum Bereitstellen von Bordnetzspannung von Teilnehmerstationen auf dem Bus übertragen werden. Die Sendeschaltung arbeitet jeweils mit einer Sendestufe, die einen Sendetransistor in Emitterschaltung aufweist, dessen Basis mit der Ansteuerleitung verbunden ist.

Beim Busankoppler nach der Erfindung kann als Referenzspannung für den Spannungsteiler die Bordnetzspannung verwendet werden.

Ein komfortablerer Busankoppler mit weiteren vorteilhaften Eigenschaften wird durch einen Busankoppler nach Anspruch 3 erzielt. Hierbei arbeitet auf den Sendetransistor der Funktion nach ein Treibertransistor, der durch den Reduzierungstransistor in seinen Amplituden begrenzt ist, wobei in Reihe zum Emitter des Reduzierungstransistors der Funktion nach eine Diode eingeschaltet ist. Hierbei ist die Sendeamplitude unabhängig von der Toleranz der Ansteuerspannung am Eingang für das Sendesignal. Die als Regelverstärker wirkende Sendeschaltung ist in ihrer Regelschwelle vorteilhaft auf Masse bezogen. Eine gute Begrenzung wird dadurch erreicht, daß das Regelkriterium durch einen Vergleich der Ausgangsamplitude der Referenzspannung über den Spannungsteiler gewonnen wird.

Zur Begrenzung von Kurzschlußströmen ist es günstig, wenn der Sendetransistor in seiner Kollektorleitung einen Widerstand zur Begrenzung von Kurzschlußströmen aufweist.

An der Verbindungsleitung zwischen dem Kondensator als Weiche für Wechselspannung und dem Spannungsteiler läßt sich günstig eine Empfängerschaltung anschließen. Die Empfängerschaltung kann vorteilhaft einen pnp-Transistor in Emitterschaltung und einen Kollektorwiderstand aufweisen, im einzelnen nach Anspruch 6. Der Emitter des pnp-Transistors ist mit der Bordnetzspannung verbunden und sein Kollektorwiderstand an Masse angeschlossen. Zwischen der Verbindung von Kondensator als Weiche für Wechselspannung und vom Spannungsteiler einerseits mit der Empfängerschaltung andererseits kann vorteilhaft ein Filter gegen Störungen vom Bus her nach Anspruch 7 eingeschaltet sein. Dieses Filter kann nach einer einfachen und günstigen Ausführung durch einen Widerstand und eine Kapazität gebildet sein.

Die Erfindung soll nun anhand von in der Zeichnung schematisch wiedergegebenen Ausführungsbeispielen näher erläutert werden.

In FIG 1 ist die Sendeschaltung nach einer besonders einfachen Basisausführung veranschaulicht.

In FIG 2 ist ein erweitertes Ausführungsbeispiel für die Sendeschaltung des Busankopplers dargestellt. Es werden hierbei weitere Vorteile erzielt.

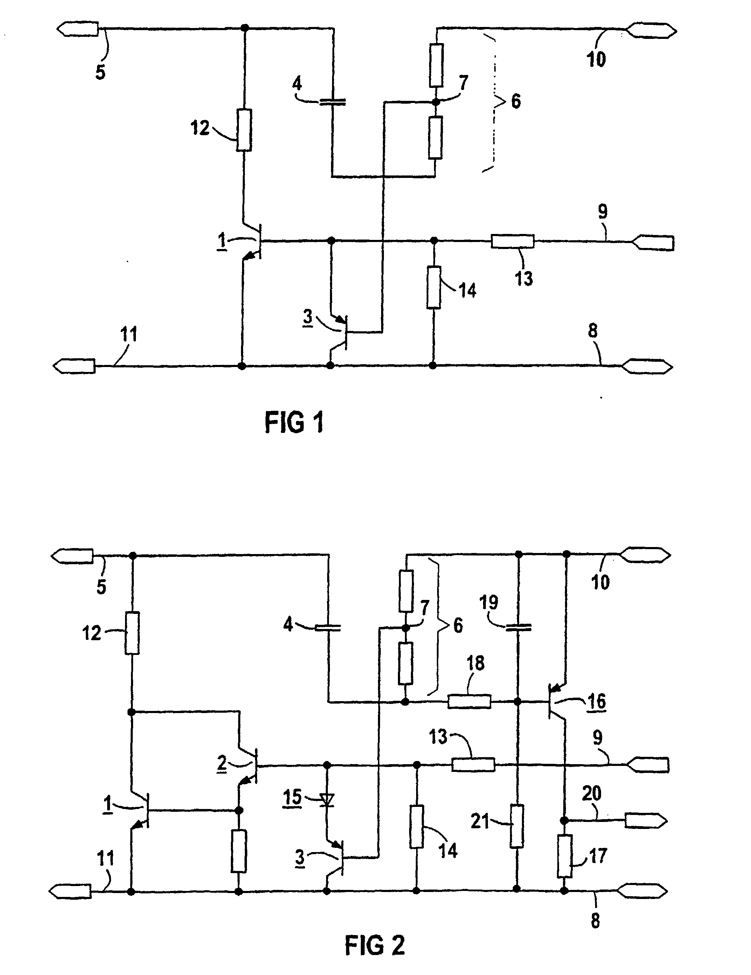

Die Sendeschaltung nach FIG 1 arbeitet in der Sendestufe mit einem Sendeventil mit der Funktion eines Transistors in Emitterschaltung, als Sendetransistor 1 bezeichnet. In der Ansteuerleitung der Sendeschaltung ist der Funktion nach durch einen Transistor von inversem Typ hinsichtlich des Sendetransistors in Kollektorschaltung, Reduzierungstransistor 3 genannt, das Ansteuersignal reduziert. Ein Kondensator 4 dient als Weiche für Wechselspannung und ist einerseits mit einem Anschluß für einen Busleiter 5 verbunden und andererseits mit einem Spannungsteiler 6. Der Spannungsteiler 6 ist auch mit einer Referenzspannung verbunden. Ein Abgriff 7 am Spannungsteiler ist mit der Basis des Reduzierungstransistors 3 verbunden. Wenn die Regelschwelle des als Regelverstärkers wirkenden Reduzierungstransistors 3 auf Masse 8 bezogen ist, ist die Sendeamplitude unabhängig von der Ansteuerspannung am Eingang 9 für das Sendesignal, da das Regelkriterium aus einem Vergleich der Ausgangsamplitude des Sendesignals mit der Referenzspannung über den Spannungsteiler 6 erfolgt. Das Referenzsignal steht an der Leitung 10 an. Ein Anschluß für einen zweiten Busleiter ist mit 11 bezeichnet.

Durch den Spannungsteiler 6 kann die Schaltschwelle für den Reduzierungstransistor 3 beispielsweise auf die halbe Referenzspannung eingestellt werden, wobei der Innenwiderstand eines ansteuernden Prozessors dann keinen Einfluß mehr hat. Um ein gleichartiges Ergebnis mit üblicher Regelungstechnik zu erreichen, würde man zumindest einen Operationsverstärker benötigen und damit Volumen und wirtschaftlichen Aufwand deutlich erhöhen.

Ein Widerstand 12 in der Kollektorleitung des Sendetransistors 1 begrenzt vorteilhaft Kurzschlußströme. Als Referenzspannung kann an der Leitung 10 die Bordnetzspannung angelegt werden. Widerstände 13 und 14 bilden gleichfalls einen Spannungsteiler, durch den die Schaltschwelle für den Sendetransistor 1 auf die halbe Referenzspannung eingestellt werden kann. Der Innenwiderstand eines ansteuernden Prozessors hat dann keinen Einfluß mehr. Um ein gleichartiges Ergebnis mit der üblichen Regelungstechnik zu erreichen, würde zumindest ein Operationsverstärker benötigt, der Volumen und wirtschaftlichen Aufwand erheblich erhöhte.

Die Schaltung nach FIG 1 ist vorteilhaft, wenn der Sendestrom am Eingang 9 für das Sendesignal ausreichend groß ist, um den Sendetransistor 1 anzusteuern.

Bei schwächeren Sendesignalen, wenn sie zum direkten Ansteuern des Sendetransistors 1 nicht ausreichen, ist eine Schaltung nach FIG 2 vorteilhaft. Hier arbeitet auf den Sendetransistor 1 der Funktion nach ein Transistor, hier Treibertransistor 2 genannt, der durch den Reduzierungstransistor 3 in seinen Amplituden begrenzt ist. In Reihe zum Emitter des Reduzierungstransistors 3 ist eine Diode 15 eingeschaltet. An der Verbindungsleitung zwischen dem Kondensator 4, der als Weiche für Wechselspannung und Gleichspannung für das Bordnetz dient, und zwischen dem Spannungsteiler 6 ist zusätzlich eine Empfängerschaltung angeschlossen, die sich bei einem Busankoppler nach FIG 2 mit wenigen Bauteilen realisieren läßt: Sie weist einen pnp-Transistor als Empfangstransistor 16, in Emitterschaltung auf, wobei der Kollektor über einen Kollektorwiderstand 17 an Masse 8 angeschlossen ist. Zwischen der Verbindung von Kondensator 4, der als Weiche dient, und vom Spannungsteiler 6 einerseits und der Empfängerschaltung mit dem Empfangstransistor 16 andererseits ist ein Filter aus Widerstand 18 und Kapazität 19 eingeschaltet, durch das Störungen vom Bus herausgefiltert werden. Die Empfangsschaltung weist den Ausgang 20 auf.

Die Schaltung funktioniert wie folgt:

Der Sendetransistor 1 bildet mit seiner Anschaltung die Sendestufe und der Treibertransistor 2 mit seiner Anschaltung die Treiberstufe. Der Reduzierungstransistor 3 bildet zusammen mit der Diode 15, einer Emitterdiode, eine Regelstufe. Der Sendetransistor 1 und Treibertransistor 2 könnten in einem FET zusammengefaßt werden. Nach derzeitigem Stand ist es jedoch wirtschaftlicher, zwei Halbleiterbereiche mit Bipolar-Transistoren oder zwei gesonderte Bipolar-Transistoren zu verwenden. Man könnte auch die Transistoren in einer Darlington-Schaltung zusammenfassen, um Bauteile einzusparen.

Der Widerstand 18 und der Kondensator 19 bilden ein Tiefpaßfilter. Zusammen mit dem Empfangstransistor 16 und dem Kollektorwiderstand 17 bilden diese Bauteile im wesentlichen die Empfangsschaltung. Nimmt beispielsweise die Spannung an der Basis des Empfangstransistors 16 um etwa 0,7 V ab, schaltet der Transistor durch und von seinem Kollektor wird dem Ausgang 20 ein HIGH-Signal zugeführt.

Wenn beim Sendevorgang am Eingang 9 ein HIGH-Signal angelegt wird, steuert der Treibertransistor 2 den Sendetransistor 1 an. Der Begrenzungswiderstand 12 grenzt dabei den Strom beispielsweise auf einen Wert unterhalb von 0,3 Ampere. Die am Anschluß 5 für einen Busleiter anstehende Busspannung wird dabei in Richtung der am Anschluß 11 für den zweiten Busleiter anstehenden Spannung bzw. auf Masse 8 gezogen. Da sich vor dem Sendeimpuls der Kondensator 4 auf eine Spannung entsprechend der Busspannung am Anschluß 5 minus der Referenzspannung an der Leitung 10 aufgeladen hat, erscheint die volle Sendeamplitude am Verbindungspunkt von Kondensator 4 und unterem Widerstand des Spannungsteilers 6 auf eine Spannung in Höhe der Referenzspannung, an der Leitung 10, überhöht. Beispielsweise kann die Referenzspannung auf 5 V eingestellt sein. Über den Spannungsteiler 6 wird diese überhöhte Spannung auf die an der Basis des Reduzierungstransistors 3 gewünschte Spannung von beispielsweise 5 V oder 7 V reduziert. Wird die vorgegebene maximale Amplitude überschritten, wird der Treibertransistor 2 durch den Reduzierungstransistor 3 zugesteuert, so daß der vorgegebene Spannungswert der Sendeamplitude beibehalten wird.

Die Diode 15 erfüllt dabei zwei wesentliche Aufgaben:

Einmal dient sie zum Ansteuern der Sendestufe bzw. des Sendetransistors 1 über die Treiberstufe bzw. über den Treibertransistor 2, wobei zwei Basis-Emitter-Spannungen wirksam werden, die an sich einen starken Temperaturkoeffizienten aufweisen. Dieser Temperaturkoeffizient wird jedoch eliminiert, da die Ansteuerung des Reduzierungstransistors 3 über die Diode 15 gleichfalls zwei Basis-Emitter-Spannungen wirksam werden läßt. Die zweite Funktion ist das Eliminieren eines Regelfehlers. Zur Veranschaulichung sei angenommen, daß man die Regelgröße auf 5 V über Masse bezogen habe. Der Regeleingriffspunkt liegt an der Basis des Treibertransistors 2 also zwei Basis-Emitter-Spannungen, nämlich der des Sendetransistors 1 und der des Treibertransistors 2, bei zwei Basis-Emitter-Spannungen oberhalb Masse. Durch die Diode 15 in Serie zur Basis-Emitter-Strecke des Reduzierungstransistors 3 liegt der Regelbezugspunkt ebenfalls zwei Basis-Emitter-Spannungen oberhalb Masse. Die gedanklichen zwei Schwellen aus Basis-Emitter-Spannungen sind dadurch kompensiert, so daß kein Regelfehler mehr wirksam werden kann.

Wenn man, zwischen der Basis des Transistors 16 und der Masse 8 einen hochohmigen Widerstand 21 zum Einstellen des Arbeitspunktes einschaltet, kann man die Eingangsschaltschwelle des Empfängers reduzieren. Beispielsweise kann man durch den Widerstand 21 in Verbindung mit dem Spannungsteiler 6 und dem Filterwiderstand 18 einen solchen Strom einstellen, daß an der Basis des Empfangstransistor 16 eine Vorspannung von minus 0,4 V entsteht, so daß die Schaltschwelle des Empfängers von 0,7 V auf 0,3 V reduziert wird. Der Empfänger wird dadurch empfindlicher eingestellt.

## Patentansprüche

1. Busankoppler mit amplitudengesteuerter Sendeschaltung zur Erzeugung eines im wesentlichen rechteckförmigen Aktivimpulses bei einem Sendeimpuls aus Aktivimpuls und Ausgleichsimpuls, für ein Bussystem, das Wechselspannungsinformation und Gleichspannung zum Bereitstellen von Bordnetzspannung von Teilnehmerstationen führt, insbesondere für den Bus der European Installation Bus Association, EIBA, wobei die Sendeschaltung mit einer Sendestufe arbeitet, die einen Sendetransistors (1) in Emitterschaltung aufweist, dessen Basis mit der Ansteuerleitung verbunden ist, und die ferner zur Reduzierung des Ansteuersignals auf der Ansteuerleitung einen Reduzierungstransistor (3) von im Vergleich zum Sendetransistor inversem Typ aufweist, dessen Emitter-Kollektor-Strecke der Basis-Emitter-Strecke des Sendetransistors (1) parallel geschaltet ist und dessen Basis mit dem Abgriff (7) eines Spannungsteilers (6) verbunden ist, der mit seinem einen Außenanschluß mit einer Referenzspannung und mit seinem anderen Außenanschluß mit einem als Weiche für die Wechselspannung dienenden Kondensator (4) verbunden ist, der seinerseits mit seinem anderen Anschluß mit einem Busleiter (5) verbunden ist.

2. Busankoppler nach Anspruch 1,
**dadurch gekennzeichnet,**
**daß** als Referenzspannung die Bordnetzspannung dient..

3. Busankoppler nach Anspruch 1 oder 2,
**dadurch gekennzeichnet,**
**daß** auf den Sendetransistor (1) ein Treibertransistor (2) arbeitet, der durch den Reduzierungstransistor (3) in seinen Amplituden begrenzt ist, wobei in Reihe zum Emitter des Reduzierungstransistors (3) eine Diode (15) eingeschaltet ist.

4. Busankoppler nach einem der Ansprüche 1 bis 3,
**dadurch gekennzeichnet,**
**daß** der Sendetransistor (1) in seiner Kollektorleitung einen Widerstand (12) zur Begrenzung von Kurzschlußströmen aufweist.

5. Busankoppler nach einem der Ansprüche 1 bis 4,
**dadurch gekennzeichnet,**
**daß** an der Verbindungsleitung zwischen dem Kondensator (4) als Weiche für Wechselspannung und dem Spannungsteiler (6) eine Empfängerschaltung angeschlossen ist.

6. Busankoppler nach Anspruch 5,
**dadurch gekennzeichnet,**
**daß** die Empfängerschaltung einen pnp-Transistor als Empfangstransistor (16) mit einem Kollektorwiderstand (17) aufweist, wobei der Emitter des Empfangstransistors (16) mit der Bordnetzspannung verbunden ist und sein Kollektorwiderstand (17) an Masse (8) angeschlossen ist.

7. Busankoppler nach Anspruch 5 oder 6,
**dadurch gekennzeichnet,**
**daß** zwischen den Außenanschlüssen des Spannungsteilers (6) ein Filter (18,19) eingeschaltet ist, wobei ein Außenanschluß auch mit der Empfangsschaltung verbunden ist.

8. Busankoppler nach Anspruch 7,
**dadurch gekennzeichnet,**
**daß** das Filter durch einen Widerstand (18) und eine Kapazität (19) gebildet ist.

9. Busankoppler nach einem der Ansprüche 5 bis 8,
**dadurch gekennzeichnet,**
**daß** zwischen der Basis des Empfangstransistors (16) und der Masse (8) ein hochohmiger Widerstand (21) zum Einstellen des Arbeitspunktes vorgesehen ist.

## Claims

1. Bus coupling unit with an amplitude-controlled transmission circuit to generate an essentially rectangular active pulse for a transmitter pulse made up of an active pulse and an equalising pulse, for a bus system which carries alternating voltage data and direct voltage to supply on-board voltage from subscriber stations, in particular for the European Installation Bus Association, EIBA, bus, in which the transmission circuit operates with a transmitter stage which has a transmitter transistor (1) in the emitter circuit, the base of which is connected to the control line, and which also has a reducing transistor (3) of an inverse type compared with the transmitter transistor, to reduce the trigger signal on the control line, the emitter-collector line of which is connected in parallel to the base-emitter line of the transmitter transistor (1) and the base of which is connected to the pick-off (7) of a voltage divider (6), the one external connection of which is connected to a reference voltage and the other external connection of which is connected to a capacitor (4) serving as a separating filter for the alternating voltage, which for its part is connected by its other connection to a bus line (5).

2. Bus coupling unit according to Claim 1, **characterised in that** the on-board voltage serves as the reference voltage.

3. Bus coupling unit according to Claim 1 or 2, **characterised in that** a driver transistor (2) operates on the transmitter transistor (1) and its amplitude is limited by the reducing transistor (3), with a diode (15) connected in series to the emitter of the reducing transistor (3).

4. Bus coupling unit according to one Claims 1 to 3, **characterised in that** the transmitter transistor (1) has a resistance (12) in its collector line to limit short circuit currents.

5. Bus coupling unit according to one of Claims 1 to 4, **characterised in that** a receiver circuit is connected to the connection line between the capacitor (4) as a separating filter for alternating voltage and the voltage divider (6).

6. Bus coupling unit according to Claim 5, **characterised in that** the receiver circuit has a PNP transistor as the receiver transistor (16) with a collector resistance (17), with the emitter of the receiver transistor (16) connected to the on-board voltage and its collector resistance (17) connected to earth (8).

7. Bus coupling unit according to Claim 5 or 6, **characterised in that** a filter (18, 19) is connected between the external connections of the voltage divider (6), with one external connection also being connected to the receiver circuit.

8. Bus coupling unit according to Claim 7, **characterised in that** the filter is formed by a resistance (18) and a capacity (19).

9. Bus coupling unit according to one of Claims 5 to 8, **characterised in that** a high-level resistance (21) is provided between the base of the receiver transistor (16) and earth (18) to adjust the operating point.

## Revendications

1. Coupleur de bus avec circuit émetteur commandé en amplitude pour produire une impulsion active sensiblement rectangulaire dans le cas d'une impulsion d'émission composée d'une impulsion active et d'une impulsion d'égalisation, pour un système de bus qui conduit des informations en tension alternative et une tension continue pour la mise à disposition d'une tension de réseau de bord de postes utilisateurs, notamment pour le bus de l'EIBA, European Installation Bus Association, dans lequel le circuit émetteur fonctionne avec un étage émetteur qui comporte un transistor d'émission (1) à émetteur commun, dont la base est reliée à la ligne de commande, et qui comporte en plus pour réduire le signal de commande sur la ligne de commande un transistor réducteur (3) qui est du type opposé à celui du transistor d'émission et dont la voie émetteur-collecteur est branchée en parallèle avec la voie base-émetteur du transistor d'émission (1) et dont la base est reliée à la prise (7) d'un diviseur de tension (6) qui est relié par l'une de ses bornes extérieures à une tension de référence et par l'autre de ses bornes extérieures à un condensateur (4) qui sert de répartiteur pour la tension alternative et qui est relié quant à lui par son autre borne à un conducteur de bus (5).

2. Coupleur de bus selon la revendication 1,
**caractérisé par le fait que** la tension de réseau de bord sert de tension de référence.

3. Coupleur de bus selon la revendication 1 ou 2,
**caractérisé par le fait qu'**un transistor d'attaque (2) dont les amplitudes sont limitées par le transistor réducteur (3) agit sur le transistor d'émission (1), une diode (15) étant branchée en série avec l'émetteur du transistor réducteur (3).

4. Coupleur de bus selon l'une des revendications 1 à 3,
**caractérisé par le fait que** le transistor d'émission (1) comporte dans sa ligne de collecteur une résistance (12) pour limiter des courants de court-circuit.

5. Coupleur de bus selon l'une des revendications 1 à 4,
**caractérisé par le fait qu'**un circuit récepteur est raccordé à la ligne de liaison entre le condensateur (4) servant de répartiteur pour la tension alternative et le diviseur de tension (6).

6. Coupleur de bus selon la revendication 5,
**caractérisé par le fait que** le circuit récepteur comporte un transistor pnp comme transistor de réception (16) avec une résistance de collecteur (17), l'émetteur du transistor de réception (16) étant relié à la tension de réseau de bord et sa résistance de collecteur (17) étant raccordée à la masse (8).

7. Coupleur de bus selon la revendication 5 ou 6,
**caractérisé par le fait qu'**un filtre (18, 19) est branché entre les bornes extérieures du diviseur de tension (6), une borne extérieure étant aussi reliée au circuit récepteur.

8. Coupleur de bus selon la revendication 7,
**caractérisé par le fait que** le filtre est formé par une résistance (18) et une capacité (19).

9. Coupleur de bus selon l'une des revendications 5 à 8,
**caractérisé par le fait qu'**une résistance (21) de grande valeur ohmique est branchée entre la base du transistor de réception (16) et la masse (8) pour régler le point de fonctionnement dynamique.
